Europäisches Patentamt

European Patent Office

Office européen des brevets

(19)

(11) EP 0 431 488 B1

(12) EUROPEAN PATENT SPECIFICATION

(45) Date of publication and mention
of the grant of the patent:
**10.01.1996 Bulletin 1996/02**

(51) Int Cl.6: **G02B 27/00**

(21) Application number: **90122949.2**

(22) Date of filing: **30.11.1990**

(54) **Dual-mirror virtual image display for vehicle instrument cluster**

Vorrichtung zum Anzeigen eines virtuellen Bildes mit zwei Spiegeln für das Armaturenbrett eines Fahrzeugs

Dispositif d'affichage d'une image virtuelle à double miroir pour un panneau indicateur pour véhicule

(84) Designated Contracting States:
**DE FR GB IT SE**

(30) Priority: **30.11.1989 US 444078**
**31.08.1990 US 576242**

(43) Date of publication of application:
**12.06.1991 Bulletin 1991/24**

(73) Proprietor: **Hughes Aircraft Company**
**Los Angeles, California 90045-0066 (US)**

(72) Inventors:
• **Hegg, Ronald**
  **Los Angeles, California 90045 (US)**
• **Norton, Paul C .**
  **Los Angeles, California 90045 (US)**
• **Chern, Mao-Jin**
  **Rancho Palos Verdes, California 90216 (US)**

(74) Representative: **Witte, Alexander, Dr.-Ing.**
**D-70178 Stuttgart (DE)**

(56) References cited:
**WO-A-89/02611**          **GB-A- 2 076 557**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The disclosed invention is directed generally to virtual image displays, and is more particularly directed to a virtual image display for vehicle instrumentation which provides for a large field of view with instrumentation image sources of different sizes.

Traditional instrumentation for vehicles such as automobiles generally comprises direct view gauges supported in a dashboard ahead of the steering wheel. While simple and efficient, such traditional direct view instrumentation requires the operator's eyes to refocus between viewing the road and the instruments. Moreover, traditional direct view instrumentation is typically sufficiently close to the operator (about 61-76 cm) that it is difficult to read for the maturing operator population that utilize reading glasses for near vision.

European patent application 88 908 792.0 filed September 6, 1988 , for "Automotive Instrument Virtual Image Display," is directed to an instrumentation virtual image display which effectively locates the virtual image of the instrumentation at an effective location that is optically further away from the operator than traditional direct view instrumentation. Location of the virtual image further from the operator is achieved by a single positive, magnifying mirror. However, the image sources that can be utilized with a single positive mirror system must be very small in order to maintain a reasonably short system length (i.e., the distance from the image source to the mirror), which typically will not permit more than one or two instruments gauges or readouts. And relatively large image sources such as electromechanical gauges cannot be utilized.

From WO-A-8 902 611 a virtual image display according to the preamble of claim 1 has become known that uses a single positive power aspheric mirror of non-rotational symmetry to create a virtual image of a miniaturized, multi-color passive image source, such as a segmented LCD panel, which is backlighted by a small filament incandescent light bulb. The aspheric surface is optimized to minimize aberrations and to reduce vertical disparity and field curvature. The image source is pre-distorted to compensate for distortion.

GB-A-2 076 557 discloses a virtual image display apparatus for alpha-numeric and pictorial information comprising an image source for providing imaging illumination and a positive power aspherical mirror for providing a virtual image of said image source to an observer. The known display apparatus may incorporate a planar mirror to fold the light path of the display and thereby reduce the size of the apparatus.

It is an object of the invention of provide a vehicle instrumentation virtual image display that provides for display of more than two gauges or readouts or that permits the use of relatively large image sources such as analog electromechanical gauges and that further provides a good optical performance reducing distortion and disparity.

The foregoing and other objectives are provided by designing a virtual image display according to the preamble of claim 1 such that a negative power aspheric mirror of non-rotational symmetry is used for reflecting the imaging beam onto the positive power aspheric mirror and by combining both mirrors to commonly reduce distortion.

The advantages and features of the disclosed invention will readily be appreciated by persons skilled in the art from the following detailed description when read in conjunction with the drawing wherein:

FIG. 1 is an elevational sectional view schematically illustrating the disclosed virtual image display.

FIG. 2 is an elevational view of a single lens display system that is helpful in understanding the virtual image display of FIG. 1.

FIG. 3 is an elevational view of a dual lens display system that is an unfolded version of the virtual image display of FIG. 1 and is helpful in understanding the virtual image display of FIG. 1.

FIGS. 4A and 4B are side and front views of an illustrative example of the negative power mirror of the virtual image display of FIG. 1.

FIGS. 5A and 5B are side and front views of an illustrative example of the positive power mirror of the virtual image display of FIG. 1.

FIG. 6 is a schematic view illustrating an off-axis lens system that is helpful in understanding the off-axis configuration of the virtual image display of the invention.

FIG. 7 is a schematic view of an on-axis lens system that utilizes an off-axis portion of a lens that is helpful in understanding known off-axis systems that utilize off-axis portions of optical elements.

In the following detailed description and in the several figures of the drawing, like elements are identified with like reference numerals.

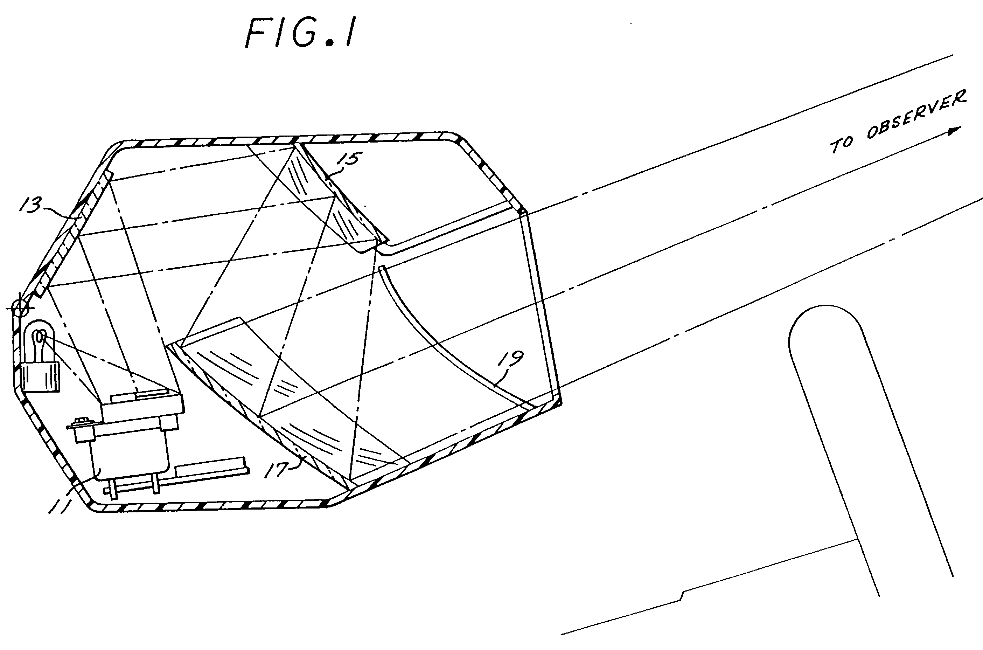

Referring now to FIG. 1, shown therein is a virtual image display system for a vehicle in accordance with the invention. The virtual image display can be located, for example, above the vehicle steering column and ahead of the steering wheel, for example generally in the region traditionally occupied by an instrument panel.

The display system includes an image source 11 and a planar fold mirror 13 responsive to imaging illumination from the image source 11. The planar fold mirror 13 reflects the imaging illumination to an off-axis convex negative power mirror 15 which provides for diverging reflected illumination. The mirror 15 is characterized as having negative power since it would produce image reduction if viewed directly, and is further characterized as providing for diverging reflection since parallel rays incident thereon would diverge upon reflection.

The illumination from the negative power mirror 15 is incident upon an off-axis concave positive power mirror 17 which provides for converging reflected illumination. The mirror 17 is characterized as having positive power since it provides for image magnification, and is further characterized as providing for converging reflection since parallel rays incident thereon would converge upon reflection.

The illumination reflected by the positive power mirror 17 passes through a curved protective window 19 to the observer. The curved protective window 19 is more particularly, as viewed from outside the display system, a concave portion of an elliptically shaped cylinder that is configured so that the reflections therefrom that can be seen by the observer will be limited to reflections of a darkened light trap located above the protective window.

The negative and positive power mirrors 15 and 17 have aspheric, non-rotationally symmetrical reflecting surfaces, and can comprise, for example, injection molded or cast molded plastic substrates having requisite aspheric surfaces which are coated with a metallic reflective coating.

The aspheric elements 15, 17 have respective optical axes OA1, OA2 which are the optical axes defined by the base radii of the respective reflecting surfaces prior to being aspherically deformed. The optical axes pass through the optical axis points P1, P2 which are utilized as the origins of the respective coordinate systems utilized to define the aspheric deformation of the respective surfaces. In other words, the optical axis points P1, P2 and the axes passing therethrough remain fixed while the surrounding areas are aspherically deformed.

For the reflecting surface of the negative mirror 15, the optical axis OA1 bisects the incidence and reflection portions of a central axis CA which is defined by the ray that joins the image source center with the image center and passes through the optical axis points P1, P2. For the reflecting surface of the positive mirror 17, the optical axis OA2 also bisects the incidence and reflection portions of the central axis CA.

Relative to the optical axes OA1, OA2, the aspheric elements are off-axis since the central axis CA is not colinear with the optical axes, and the image source and image do not lie on the optical axes of the aspheric elements including any reflective folds thereof.

The central axis CA further defines an optical path travelled by the imaging illumination from the image source to the eyes of the vehicle operator, and as discussed further herein such optical path has a distance that is greater than the effective viewing distance of the virtual image (i.e., the distance at which the operator's eyes focus in order to view the virtual image).

It is noted that although prior systems have used mirrors comprising off-axis portions of spherical or aspherical sections of a conic (e.g., paraboloid), such systems place the image source on the optical axis of the conic sections used to define the mirrors. This is done to maintain some rotational symmetry for ease of fabrication. However, this limits the performance of such optical systems by constraining the degree of asphericity that one can apply to the mirror surfaces. The optical system described in this invention does away with this restriction by placing the image source off-axis, thereby decoupling the optical axis of the aspheric surface from the image source. The aspheric mirrors of the invention are not rotationally symmetric, taking any shape that improves the overall visual performance. This added degree of design freedom allows this invention to exceed the performance of previous designs.

The negative mirror 15 is the smaller mirror and is positioned relative to the larger positive mirror 17 pursuant to relatively simple optical formulae (e.g., as in a Cassegrain telescope) to achieve a reasonable magnification range for a magnified virtual image without necessitating a change in the size of the image source 11 or the virtual image range (i.e., the effective distance at which the viewer's eyes focus to see the virtual image). In accordance with the invention, the virtual image range is in the range of about 10.16 to 30.48 cm (4 to 12 feet), which is greater than the typical distance between the driver's eyes and direct view instrumentation in an instrument panel.

The use of a negative mirror and a positive mirror provides for appropriate magnification, virtual image range, field of view, and optical performance (i.e., reduction of distortion and disparity), while maintaining an optical system length (i.e., the distance between the image source and the mirror optically closest to the nominal eye position) that is more compact than a single, positive mirror system having comparable parameters. In other words, for a given magnification, virtual image range, field of view, and optical performance, the disclosed dual mirror system would have a shorter system length than a comparable single positive mirror system and therefore a smaller optical package.

The compactness of the dual mirror system results from the reverse telephoto arrangement of the negative and positive mirrors, which provides for an increased working focal length without a significant increase in the system length. The working focal length is the distance from the image source to the "first principle plane" which, as is well known, is located at the position at which a single lens or mirror would be located to produce a single lens or mirror optical system having substantially the same parameters. The first principle plane for the dual mirror system is located between the nominal eye position and the mirror optically closest thereto, while the first principle plane for a single positive mirror system is located at the mirror. In other words, the first principle plane for the dual mirror system is not constrained to be at the physical location of one of the optical elements.

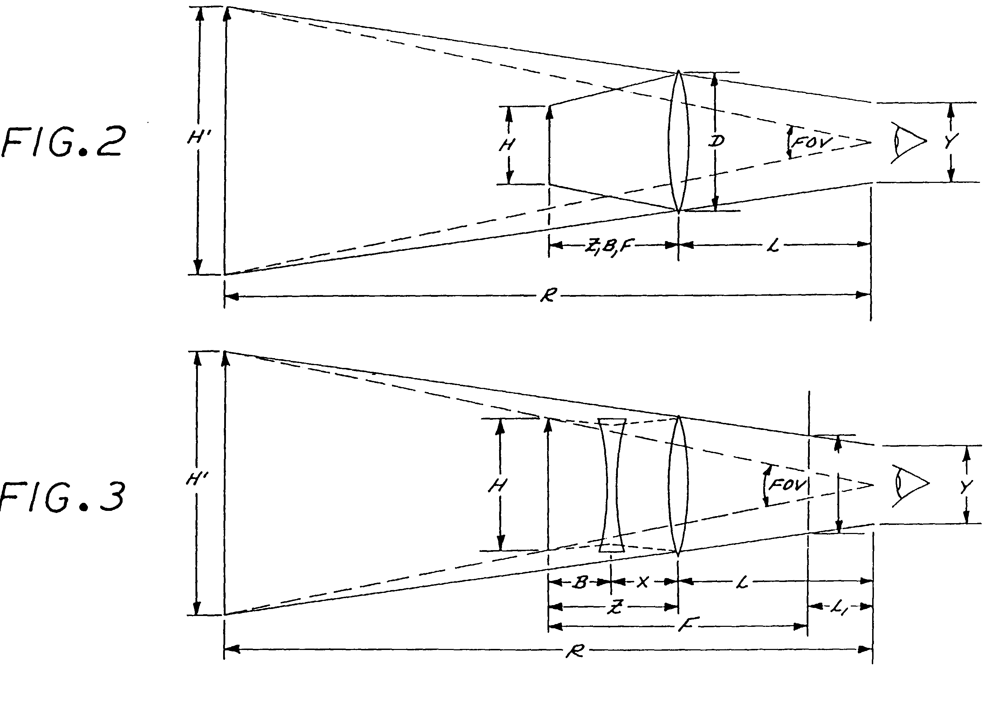

The factors that allow the dual mirror system to achieve a more compact system length can be better understood by a comparison of the single and dual lens systems respectively depicted in FIGS. 2 and 3, which essentially are unfolded versions of a single lens system and a dual mirror system, and are easier to understand. The pertinent optical parameters are as follows:

Range (R): The distance from the nominal eye position to the virtual image.

Eye Relief (L): The distance from the nominal eye position to the first lens surface.

Eye Box (Y): The diameter of the space about the nominal eye position where the virtual image can be viewed without any vignetting.

Field of View (FOV): The angular substance of the virtual image as viewed from the nominal eye position.

System Length (Z): The distance between the lens closest to the eye and the image source.

Back Focus (B): The distance from the image source to the lens nearest the image source.

Working Focal Length (F): The distance from the image source to the first principle plane of the optical system.

Working Diameter (D): The diameter of the first principle plane.

Working F-Number (F/#): The ratio of the working focal length and the working diameter (i.e., F/D).

Image Source Size (H): The height (in the vertical plane) of the image source.

Virtual Image Size (H'): The height (in the vertical plane) of the virtual image.

The optical performance of the respective single and dual lens systems (i.e., the reduction of distortion and disparity) is directly related to the working F/#. In particular, performance deteriorates as the working F/# is decreased. Therefore, for a given performance specification, the working F/# is generally fixed. Also, it may be desirable to make the system length Z as short as practicable to minimize the optical package.

For a single lens system as shown in FIG. 2, the working focal length F, the back focus B, and the system length Z are equal. The working diameter D is simply the diameter of the lens. For a given range R, eye relief L, eye box size Y, and and field of view FOV, the working diameter D can be expressed as follows:

$$D = 2 L \tan (FOV/2) + Y (1 - L/R) \qquad \text{(Equation 1)}$$

or

$$D = 2 L \tan(FOV/2) + Y, \text{ for } R \to \infty \qquad \text{(Equation 2)}$$

The required image source size H can be determined by understanding that the ratio of the virtual image size H' and the image source size H is equal to the ratio of the image distance (lens to image) to the image source distance (lens to image source):

$$H = (2 R \tan(FOV/2) F)/(R-L) \qquad \text{(Equation 3)}$$

or

$$H = 2 F \tan(FOV/2), \text{ for } R \to \infty \qquad \text{(Equation 4)}$$

Thus, for specific FOV, range, eye box, and eye relief requirements, the working diameter is defined by Equation 1. Since the working F/# is minimized and fixed for a specific performance requirement, the working focal length is also fixed (since F = DF/#), and the image source size is then defined by Equation 1.

A single lens system provides adequate performance if the image source can be arbitrarily sized to match the image source size requirements discussed above. Such sizing can be achieved if the image source comprises a liquid crystal display (LCD) or vacuum fluorescent display (VFD) technology wherein the size of the graphics can be readily changed to be sufficiently small. However, electromechanical gauges cannot be miniaturized smaller than a certain size, for example about one inch in diameter. Given the size constraint for an analog image source, the foregoing equations will need to be applied in reverse starting with a given image source size.

If the analog gauge is larger than the proposed image source size dictated by the equations, then both the working focal length and the FOV will have to increase for a constant working F/#. If the FOV must remain constant, then the working diameter will also be constant, and the only way to use a larger image source size will be to increase the F/#. This will also increase the working focal length (even greater than in the case where the FOV can be increased). Given that an analog gauge image source cannot be made as small as an LCD or VFD source, the net result is that the system length must be increased for a single lens system if an analog gauge is used as the image source. A longer system means a longer box and an overall increase in the optical package size.

Consider now the dual lens system of FIG. 3 which is the unfolded version of the disclosed dual mirror system, and functions as a reverse telephoto arrangement that provides for an increased working focal length without an increase in the system length. For simplicity, the range is set to infinity as above relative to the single lens system. The focal length of the two lenses are f1 and f2, with f1 being a positive focal length and f2 a negative focal length. the distance between the two lenses is x. Therefore, the working focal length of this system is:

$$F = (f1) (f2)/(f1+f2-x) \qquad \text{(Equation 5)}$$

As can be seen in FIG. 3, the focal length actually exceeds the system length. By varying f1 and f2, the focal length is substantially independent of the back focus and the system length. The distance L1 from the nominal eye position to the first principle plane is:

$$L1 = L + x + B - F \qquad \text{(Equation 6)}$$

And the working diameter is:

$$D = 2\ L1\ \tan(FOV/2) + Y \qquad \text{(Equation 7)}$$

Solving for the image source size H with the range R at infinity, Equation 7 reduces to the following:

$$H = 2\ F\ \tan(FOV/2) \qquad \text{(Equation 8)}$$

which is the same as Equation 4.

If the image source size is changed while keeping the working F/# and the field of view FOV constant, the working focal length is set by Equation 8; the working diameter D is set by the working F/#; and L1 is set by Equation 7. Equation 6 can then be solved for the quantity (x + B) which is the system length.

As an example of the difference between the single and dual-lens systems, the optical parameters for the single and dual-lens systems will be calculated for the following system specification:

$$R \rightarrow \infty$$
$$L = 61\ cm\ (24")$$
$$Y = 6.4\ cm\ (2.5")$$
$$FOV = 3°$$

For reasonable performance, the working F/# should not be less than 5.1 cm (2.0").

Using Equation 2 for a single lens system, the working diameter must be 9.543 cm (3.757 inches) which requires a focal length of 19.09 cm (7.514 inches) (from F/# = F/D), which is also the system length since for a single lens system the system length is equal to the working focal length. From Equation 4 the image source size must be 1.001 cm (0.394 inch). Consider now the use of an analog gauge package that is 2.54 cm (one inch) in size for the image source. From Equation 4 and keeping the FOV at 3°, the focal length must increase to 48.499 (19.094 inches). This is a 150% increase in the system length. The working diameter will remain at 9.543 cm (3.757 inches) leaving us with an F/# of 5.082.

If the system length of 48.499 cm (19.094 inches) cannot be tolerated, the FOV can be changed to reduce the focal length. By substituting (D)(F/#) for the focal length F in Equation 2, and by substituting the expression for D from Equation 2, the image source can be related to the working F/# and the FOV:

$$H = (2\ F/\#\ \tan\ (FOV/2))\ [2\ L\ \tan\ (FOV/2) +Y] \qquad \text{(Equation 9)}$$

Solving for the FOV in the above quadratic equation (and keeping the working F/# fixed at 2.0 for our example), provides a value of 5.803. Substituting that value in Equation 4 results in a working focal length of 25.06 cm (9.865 inches) and a working diameter of 12.53 cm (4.933 inches). Though the system length has been reduced to 25.06 cm (9.865 inches) (still greater than the original 19.09 cm (7.514 inches) for a smaller image source size of 1.001 cm (0.394 inch)), the working diameter has increased from 9.543 cm (3.757 inches) to 12.53 cm (4.933 inches) (31% larger). Thus, even with the new FOV, the overall size of the system has increased.

The dual lens approach will now be analyzed for an image source size of one inch. From Equation 8, the working focal length is 48.50 cm (19.094 inches) for a 3° FOV. Setting the distance between the two lenses, x, to be 7.62 cm (3 inches) and setting the system length to be 19.09 cm (7.514 inches) (the shortest possible single lens design for the specified eye relief L, eyebox Y, and field of view FOV), the back focus will be 11.47 cm (4.514 inches). From Equation 6, L1 is then equal to 31.55 cm (12.42 inches). The focal lengths of each lens can vary relative to one another, but one solution from Equation 5 is that f1 is 19.22 cm (7.568 inches) and f2 is -19.22 cm (-7.568 inches). Since the size of f1 is the same as the working diameter of the single lens system of 9.543 cm (3.757 inches), the F/# of f1 is 2.014.

From the foregoing comparison, it should be appreciated that for a specified image source size along with the optical specification of range, FOV, etc., the dual lens system provided for a system length that is comparable to a single lens system having a smaller image source size. It is also pointed out that since the working F/#'s of the individual lenses in the dual lens system are not too fast, the optical performance will be better than the single lens approach since there are two lenses to optimize.

As to the implementation of the disclosed dual mirror virtual display system, the foregoing analysis of the dual lens system could be utilized to arrive at a first-order design, which would be followed by utilizing an optical design computer program with the spherical mirror versions of the first-order design. With the computer program, the nominal spherical surfaces are deformed to meet the desired criteria of minimizing distortions when viewed in the eyebox. Since the eyebox and virtual image are off-axis with respect to the individual axes of the two mirrors, the equation of the aspheric surfaces can be adjusted independently from the axis joining the eye and the virtual image. This provides for greater latitude in the design process and will better correct the optical aberrations and distortions. Such distortions can cause vertical disparity and magnification variations that are objectionable in the final design.

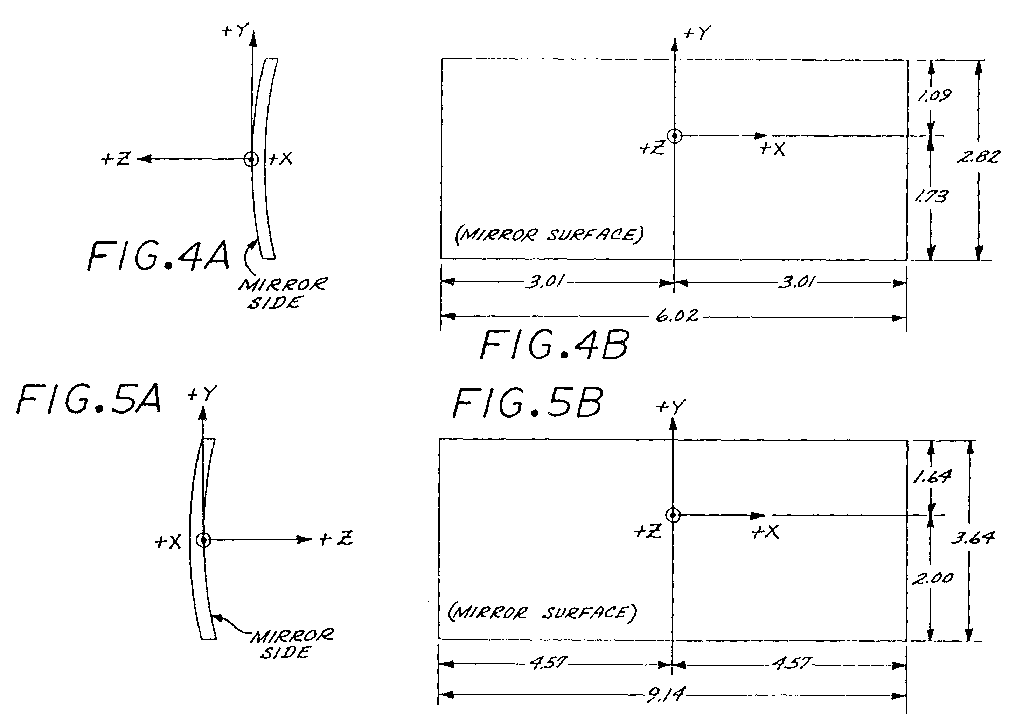

Referring now to FIGS. 4A, 4B, 5A, 5B, the following sets forth illustrative examples of the aspheric reflecting surfaces of the negative and positive mirrors for a dual mirror virtual image display in accordance as in this invention, wherein the surfaces have aspherically deformed to reduce distortions. The dimensions of the mirrors shown in these figures is in inches.

The aspheric surface of the illustrative example of the negative mirror satisfies the following surface equation relative to the coordinate system shown in FIGS. 4A and 4B:

$$Z(X,Y) = S(X,Y) + \sum_{i=1}^{5} C_i F_i(X,Y)$$

where $C_i$ and $F(X,Y)_i$ are as follows (in inches) :

| i | $C_i$ | $F(X,Y)_i$ |
|---|---|---|
| 1 | $-0.152819 \times 10^{-1}$ | $X^2-Y^2$ |
| 2 | $-0.228226 \times 10^{-2}$ | $Y(X^2+Y^2)$ |
| 3 | $-0.384185 \times 10^{-2}$ | $Y(3X^2-Y^2)$ |
| 4 | $-0.279668 \times 10^{-3}$ | $X^4-Y^4$ |
| 5 | $-0.652462 \times 10^{-6}$ | $Y(X^2+Y^2)^2$ |

and $S(X,Y)$ is:

$$S(X,Y) = R + (R^2 - X^2 - Y^2)^{1/2}$$

and R = (-11.8231 inches) -30.0307 cm

The following table sets forth data for sample points along the aspheric surface of the negative mirror:

| NEGATIVE MIRROR SURFACE SAMPLE POINTS | | |
|---|---|---|
| X | Y | Z |
| 2.54 cm (+1 inch) | 0 | (-0.057928 inches) 0.147137 cm |
| 0 | 2.54 cm (+1 inch) | (-0.025244 inches) 0.064120 cm |
| 0 | -2.54 cm (-1 inch) | (-0.028365 inches) 0.072047 cm |
| 2.54 cm (+1 inch) | 2.54 cm (+1 inch) | (-0.097131 inches) 0.246713 cm |
| 2.54 cm (+1 inch) | -2.54 cm (-1 inch) | (-0.072639 inches) 0.184503 cm |

The aspheric surface of the positive mirror utilized with the foregoing described negative mirror satisfies the following surface equation relative to the coordinate system shown in FIGS. 5A and 5B:

$$Z(X,Y) = S(X,Y) + \sum_{i=1}^{5} C_i F_i(X,Y)$$

where $C_i$ and $F(X,Y)$ are as follows (in inches) :

| i | $C_i$ | $F(X,Y)_i$ |
|---|---|---|
| 1 | $-0.617592 \times 10^{-2}$ | $X^2-Y^2$ |
| 2 | $-0.593066 \times 10^{-3}$ | $Y(X^2+Y^2)$ |
| 3 | $-0.560451 \times 10^{-3}$ | $Y(3X^2-Y^2)$ |
| 4 | $-0.206953 \times 10^{-4}$ | $X^4-Y^4$ |
| 5 | $-0.181196 \times 10^{-4}$ | $Y(X^2+Y^2)^2$ |

and $S(X,Y)$ is:

$$S(X,Y) = R - (R^2 - X^2 - Y^2)^{1/2}$$

and R = (-14.1672 inches) -35.985 cm.

The following table sets forth data for sample points along the aspheric surface of the positive mirror:

| POSITIVE MIRROR SURFACE SAMPLE POINTS | | |
|---|---|---|
| X | Y | Z |
| 2.54 cm (+1 inch) | 0 | (-0.041533 inches) 0.105494 cm |
| 0 | 2.54 cm (+1 inch) | (-0.029191 inches) 0.074145 cm |
| 0 | -2.54 cm (-1 inch) | (-0.029089 inches) 0.073886 cm |
| 2.54 cm (+1 inch) | 2.54 cm (+1 inch) | (-0.073142 inches) 0.185781 cm |
| 2.54 cm (+1 inch) | -2.54 cm (-1 inch) | (-0.068383 inches) 0.173693 cm |

The foregoing mirror surfaces can be utilized in a display system having the following parameters:

Range R: (80 inches) 203.2 cm
Eye Relief L:(24 inches) 60.96 cm
Back Focus B: (5.7 inches) 14.48 cm
System Length Z: (9 inches) 22.86 cm
Image Source Size: (1.25 by 5 inches) 3.18 by 12.7 cm
Virtual Image Size: 4° x 16° at 203.2 cm (80 inch) range

It should be appreciated that the optical axes OA1, OA2 of the aspheric elements described above are along the respective Z axes of the respective coordinate systems utilized to define the aspheric deformation of the respective surfaces, that the central axis CA of the display system that includes the aspheric elements passes through the origins of such coordinate systems, and that such origins correspond to the optical axis points P1, P2.

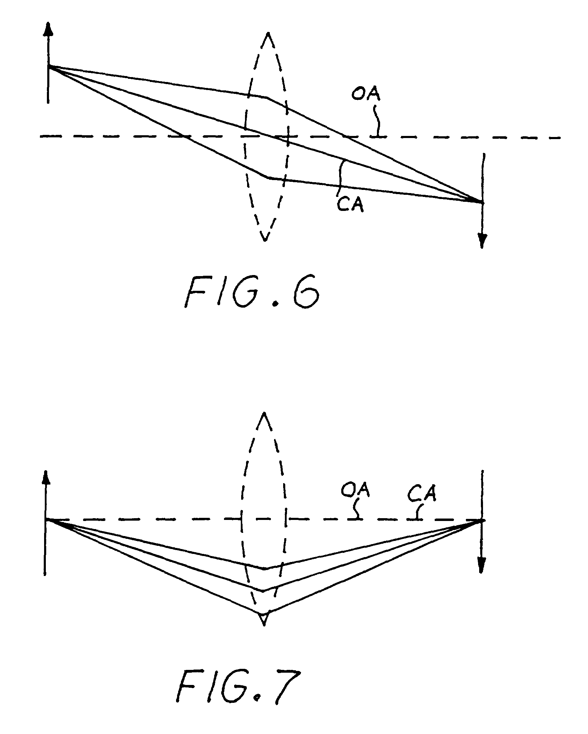

Referring now to FIG. 6, shown therein is a simple off-axis lens system illustrating the use of "off-axis" in conjunction with the invention. The central axis CA that joins the center of the object and the center of the image is not coincident with the optical axis OA of the lens, and thus the central axis is "off-axis" as are the object and image. In the invention, the off-axis configuration is initially set up relative to the optical axis of a spherical element which is then distorted as described above to achieve the appropriate aspheric surface.

Referring now to FIG. 7, shown therein is a simple lens system illustrating known on-axis systems that utilize a portion of an optical element that is positioned off-axis relative to the optical axis of the optical element, where such optical axis is defined by the base radius of the optical element. While an off-axis portion of an optical element is used, the central axis that joins the center of the object and the center of the image is coincident with the optical axis OA and thus "on-axis," as are the object and image (i.e., the object and image lie on the optical axis).

While the foregoing has been primarily in the context of image sources comprising electromechanical analog gauges, it should be appreciated that the disclosed dual mirror virtual display system can be utilized with VFD and LCD sources that are larger than those utilized with a single mirror system, which permits more detail in the graphics.

The foregoing has been a disclosure of a compact virtual image display system which can include a plurality of analog electromechanical gauges and provides for a relatively far viewing distance, for example in the range of about four to twelve feet, and a relatively large field of view.

Although the foregoing has been a description and illustration of specific embodiments of the invention, various modifications and changes thereto can be made by persons skilled in the art without departing from the scope of the invention as defined by the following claims.

**Claims**

1.  A virtual image display for a vehicle, comprising

    -   an image source means (11) arranged to provide an illuminated object in a diverging imaging beam;
    -   a positive power aspheric mirror (17) of non-rotational symmetry arranged with said image source means (11) to convert said diverging imaging beam into a converging imaging beam that produces a virtual image of said image source means (11) observable by an operator of the vehicle at a viewing distance that is greater than the optical path distance travelled by the imaging beam from the image source means (11) to the eyes of the vehicle operator;
    -   said aspheric mirror (17) being aspherically deformed; characterized by
    -   a negative power aspheric mirror (15) of non-rotational symmetry arranged to reflect the diverging imaging beam onto said positive power aspheric mirror (17);

- said negative power aspheric mirror (15) and said positive power aspheric mirror (17) being configured to commonly reduce distortion including distortion produced by their non-rotational symmetry.

2. The virtual image display of claim 1, characterized in that said image source means (11) includes a plurality of electromechanical vehicle instrument gauges.

3. The virtual image display of any of claims 1 or 2, characterized in that said virtual image is a magnified image of said image source means (11).

4. The virtual image display of any of claims 1 through 3, characterized in that the viewing distance is in the range of about 1,22 to 3,66 m (four to twelve feet).

**Patentansprüche**

1. Virtuelle Bildanzeige für ein Fahrzeug, umfassend

- eine Bildquelleneinrichtung (11), die zur Erzeugung eines beleuchteten Objektes in einem divergierenden abbildenden Strahl geeignet ist;
- ein vergrößernder, nicht rotationssymmetrischer asphärischer Spiegel (17), der mit der Bildquelleneinrichtung (11) zusammenwirkt, um den divergierenden abbildenden Strahl in einen konvergierenden abbildenden Strahl zu konvertieren, der ein virtuelles Bild der Bildquelleneinrichtunq (11) erzeugt, das von einer Bedienungsperson des Fahrzeugs in einem Sichtabstand sichtbar ist, der größer ist als die Länge des optischen Weges, die der abbildende Strahl von der Bildquelleneinrichtung (11) bis zu den Augen des Fahrzeugführers zurücklegt;
- wobei der asphärische Spiegel (17) asphärisch deformiert ist; gekennzeichnet durch
- einen verkleinernden, nicht rotationssymmetrischen, asphärischen Spiegel (15), der angeordnet ist, um den divergierenden abbildenden Strahl auf den vergrößernden asphärischen Spiegel (17) zu reflektieren;
- wobei der verkleinernde asphärische Spiegel (15) und der vergrößernde asphärische Spiegel (17) dazu geeignet sind, gemeinsam Verzerrungen zu reduzieren, einschließlich der Verzerrung, die durch ihre nicht rotationssymmetrische Ausführung erzeugt wird.

2. Virtuelle Bildanzeige nach Anspruch 1, dadurch gekennzeichnet, daß die Bildquelleneinrichtung (11) eine Mehrzahl von elektromechanischen Fahrzeuginstrumentenanzeigen umfaßt.

3. Virtuelle Bildanzeige nach Anspruch 1 oder 2, dadurch gekennzeichnet, daß das virtuelle Bild ein vergrößertes Bild der Bildquelleneinrichtung (11) ist.

4. Virtuelle Bildanzeige nach irgendeinem der Ansprüche 1 bis 3, dadurch gekennzeichnet, daß der Sichtabstand ungefähr 1,22 bis 3,66 m (4 bis 12 Fuß) beträgt.

**Revendications**

1. Un dispositif de visualisation d'image virtuelle pour un véhicule, comprenant

- une source d'image (11) conçue pour produire un objet illuminé dans un faisceau de formation d'image divergent ;
- un miroir asphérique de puissance positive (17), ayant une symétrie qui n'est pas de révolution, associé à la source d'image (11) pour convertir le faisceau de formation d'image divergent en un faisceau de formation d'image convergent qui produit une image virtuelle de la source d'image (11), observable par un opérateur du véhicule à une distance d'observation qui est supérieure à la longueur de chemin optique que parcourt le faisceau de formation d'image provenant de la source d'image (11), jusqu'aux yeux de l'opérateur du véhicule ;
- le miroir asphérique (17) étant déformé de manière asphérique ; caractérisé par
- un miroir asphérique de puissance négative (15) ayant une symétrie qui n'est pas de révolution, disposé de façon à réfléchir vers le miroir asphérique de puissance positive (17) le faisceau de formation d'image divergent ;
- le miroir asphérique de puissance négative (15) et le miroir asphérique de puissance positive (17) ayant une configuration telle qu'ils réduisent en commun la distorsion, comprenant la distorsion qui est produite par leur symétrie qui n'est pas de révolution.

2. Le dispositif de visualisation d'image virtuelle de la revendication 1, caractérisé en ce que la source d'image (11) comprend un ensemble d'indicateurs d'instruments électromécaniques de véhicule.

3. Le dispositif de visualisation d'image virtuelle de l'une quelconque des revendications 1 ou 2, caractérisé en ce que l'image virtuelle est une image agrandie de la source d'image (11).

4. Le dispositif de visualisation d'image virtuelle de l'une quelconque des revendications 1 à 3, caractérisé en ce que la distance d'observation est dans la plage d'environ 1,22 à 3,66 m (quatre à douze pieds).

FIG.1

TO OBSERVER

13

15

19

17

11

EP 0 431 488 B1

10

FIG. 2

FIG. 3

FIG.4B

FIG.5B

FIG.4A

FIG.5A

FIG.6

FIG.7